(19) Europäisches Patentamt
European Patent Office
Office européen des brevets

(11) **EP 2 990 456 A1**

(12) **EUROPÄISCHE PATENTANMELDUNG**

(43) Veröffentlichungstag:
02.03.2016 Patentblatt 2016/09

(51) Int Cl.:
*C09K 8/584* (2006.01)     *B09C 1/02* (2006.01)

(21) Anmeldenummer: 14182973.9

(22) Anmeldetag: **31.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Roeber, Oliver**
**9526 Zuckenriet (CH)**

(72) Erfinder:
• **Roeber, Oliver**
**9526 Zuckenriet (CH)**
• **Olschewski, Brigitte**
**12557 Berlin (DE)**

(74) Vertreter: **Fabry, Bernd**
**IP2 Patentanwalts GmbH**
**Schlossstrasse 523-525**
**41238 Mönchengladbach (DE)**

(54) **Tenside auf der Basis von Kondensationsprodukten von Eiweisshydrolysaten und Fettsäuren, und Verfahren zur Erdölförderung und Bodendekontaminierung unter Nutzung der Tenside**

(57) Vorgeschlagen wird ein Verfahren zum Entfernen von Kohlenwasserstoffen aus Böden, Gesteinen, Sedimenten und Biomieten bei dem man
(a) die Substrate mit einer wässrigen Phase behandelt, welche einen Gehalt an Polymerkondensaten aufweist, die dadurch erhältlich sind, das man eine Proteinquelle mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, in der sich die Schadstoffe lösen, und
(b) die wässrige Tensidphase, welche die Kohlenwas- serstoffe enthält, abpumpt.

EP 2 990 456 A1

**Beschreibung**

**GEBIET DER ERFINDUNG**

Die Erfindung befindet sich auf dem Gebiet der Bodensanierung sowie der tertiären Erdölförderung und betrifft ein Verfahren zur Entfernung von Kohlenwasserstoffen, nämlich zum einen von Schadstoffen, speziell CKW, und zum anderen von Erdöl aus Böden und Biomieten unter Verwendung von speziellen Polymerkondensaten.

**STAND DER TECHNIK**

Zur Dekontamination von Böden und Biomieten wurde eine Reihe von Verfahren entwickelt, die sich prinzipiell in on-site und in-situ Behandlungen unterscheiden lassen.

Durch Neumann, H. J. et al.: Tensidfluten - Ein Jahrzehnt Forschung, [Erdoel, Erdgas, Lagerstaettentechnik, 102(9), 1986] ist bekannt, dass mit Tensidgemischen mit einer anionaktiven und einer nichtionogenen Komponente in einer Konzentration oberhalb der kritischen Micellbildungskonzentration die Grenzflächenspannung an der Grenzfläche zwischen Wasser- und Ölphase im Porenraum von Öllagerstätten abgesenkt und damit das Rohöl bei seiner Förderung für die bessere Löslichkeit in Wasser mobilisiert werden kann.

In DE 3908171 A1 ist ein Verfahren zum Entfernen von kohlenwasserstoffhaltigen Ablagerungen in Erdböden beschrieben, das ein Waschen des kontaminierten Erdbodens mit Wasser vorsieht, welches ein oder mehrere grenzflächenaktive Stoffe wie Tenside enthält. Als geeignetes Waschmittel wird die Zusammensetzung aus einem Fluid und einem Liposom vorgeschlagen.

Aus dem Aufsatz von *Spei* mit dem Titel "Reinigung mineralölkontaminierten Erdreichs mit Tensiden" [WLB Wasser, Luft und Boden, Heft 7-8, 1991] ist bekannt, dass die Reinigungswirkung von Tensiden und ihre Fähigkeit zur Bildung von stabilen Emulsionen sowie die Fähigkeit zur Erniedrigung der Oberflächenspannung von Wasser auf ihrer Molekülstruktur beruht. Jedes Tensid besteht aus einer hydrophoben und einer hydrophilen Baugruppe. Die hydrophile Baugruppe mit einer positiven Ladung weist auf ein kationisches Tensid, mit einer negativen Ladung auf ein anionisches Tensid und ohne Ladung auf ein nichtionisches Tensid hin. Besitzt das Molekül sowohl positive als auch negative Ladungszentren, handelt es sich um amphotere Tenside. Für Bodenwaschanlagen stehen Tenside als Reinigungsmittel, deren Ausgangsstoffe ausschließlich anionische und/oder nichtionische Tensidkombinationen sind, sowie als Entschäumer, organische Emulsionsspalter, Adsorptionstrennmittel und Flockungshilfsmittel zur Verfügung.

In DE 4446654 A1 wird ein Verfahren beschrieben, das die Behandlung von schadstoffbelasteten Böden unter Verwendung von oberflächenaktiven und emulgierenden Extraktionsgemischen ermöglicht. Nachteilig wirkt sich hier aus, dass es sich um ein on-site Verfahren handelt, bei dem der zu reinigende Stoff zerkleinert und vorklassiert werden muss.

In den beiden deutschen Patentanmeldungen DE 4210949 A1 und DE 4333255 A1 wird zur Reinigung kontaminierter Böden der kombinierte Einsatz von elektrischen Feldern, Schallfeldern, Tensiden und/oder Oxidationsmitteln vorgeschlagen. Diese Verfahren haben aber den Nachteil, dass über einen langen Zeitraum hohe Energiemengen eingesetzt werden müssen und eine hohe Tensidkonzentration erfordern.

In EP 0761323 A1 wird für ein in-situ Sanierungsverfahren ein Bohrkopf zum Injizieren von Waschmitteln und das Herstellen von Bohrlöchern mit diesem Bohrkopf in dem kontaminierten Boden dargestellt.

In DE 4310776 A1 wird bei der hydraulischen in-situ Sanierung kontaminierter Böden auf Probleme der Tensidanwendung infolge einer starken Abnahme der Durchlassfähigkeit des organisch kontaminierten Bodens hingewiesen, die durch Bildung viskoser Emulsionen im Boden begründet ist. Diese störende Emulsionsbildung wird verhindert, indem man für die jeweiligen Schadstoffe effektiven Emulgator in Form eines nichtionischen Tensids mit niedrigem Ethoxylierungsgrad ein zweites Tensid mit deutlich höherem Ethoxylierungsgrad oder mit einem anderen voluminösen und/oder polaren Molekülteil zusetzt. Als Mittel für die hydraulische in-situ Sanierung ist ein Gemisch aus mindestens zwei nichtionischen Tensiden vorgeschlagen, das den kontaminierten Boden durchströmt. Dadurch soll die Emulgierfähigkeit, die Viskosität der Emulsionen sowie deren Stabilität herabgesetzt werden. Durch einen weiteren Zusatz von anionischen Tensiden wird eine Minderung der Tensidsorption erzielt, die durch die negative Oberflächenladung der Bodenbestandteile entstehen kann.

Gegenstand der DE 19914922 B4 ist ein Verfahren, bei dem man die Böden mit einer Mischung aus einem nichtionischen und einem anionischen Tensid behandelt, die in einer Konzentration unter ihrer kritischen Micellbildungskonzentration eingesetzt werden. Die CKW wandern in die Tensidphase und können nach einigen Tagen abgepumpt werden.

In WO 1998 047638 A1 wird ein Verfahren zur in-situ Bodensanierung von mit Schadstoff kontaminiertem Boden bei 0 bis 20 Grad Celsius beschrieben, bei dem der Schadstoff aus dem Boden mittels einer Mikroemulsion extrahiert wird, die als Ölkomponente eine oder mehrere Triglyceride, ätherische Öle und/oder Fettsäureester und ein oder mehrere verzweigte und/oder mehrkettige anionische Tenside enthält. Der Schadstoff weist eine höhere Dichte als Wasser auf. Aufgrund ihrer geringeren Dichte transportieren die Tenside, die dem kontaminierten Boden zugeführt werden und dort die Mikroemulsion bilden, den Schadstoff hinauf zur Erdoberfläche.

Der gemeinsame Nachteil der in diesen Schriften beschriebenen technischen Lehren liegt darin begründet, dass bei beiden in-situ Verfahren die für die Sanierung insbesondere mit chlorhaltigen organischen Schadstoffen kontaminierten Bodens erforderliche Emulsionsbildung das Einbringen von wässrigen Flüssigkeiten mit anionischen und ionischen Tensiden in sehr hoher Konzentration erfordert. Ein weiterer Nachteil besteht darin, dass die für diese Einsatzzweck bevorzugten Tensidkombinationen selbst wieder umweltbelastend sind, d.h. Wassergefährdungsklassen von 2 oder sogar 3 aufweisen.

Die Aufgabe der Erfindung besteht darin, ein kostengünstiges und unweltfreudliches in-situ Verfahren zum Entfernen von Schadstoffen, speziell von halogenierten Kohlenwasserstoffverbindungen aus Böden und Biomieten zur Verfügung zu stellen, bei dem unter Einsatz von Tensiden der WGF 0 bzw. 1 der erforderliche Mengenaufwand an Tensiden erheblich reduziert wird.

## BESCHREIBUNG DER ERFINDUNG

Gegenstand der Erfindung ist ein erstes Verfahren zum Entfernen von Kohlenwasserstoffen aus Böden, Gesteinen, Sedimenten oder Biomieten, bei dem man

(a) die Substrate mit einer wässrigen Phase behandelt, welche einen Gehalt an Polymerkondensaten aufweist, die dadurch erhältlich sind, das man eine Proteinquelle mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, in der sich die Schadstoffe lösen, und

(b) die wässrige Phase, welche die Kohlenwasserstoffe enthält, abpumpt.

Überraschenderweise wurde gefunden, dass mit Hilfe der Wasserphase, die als oberflächenaktive Komponente die speziellen Polymerkondensate enthält, die Grenzflächenspannung zwischen den Schadstofftröpfchen und dem Grundwasser im Aquifer derart gesenkt wird, dass durch Erhöhung der Mobilität des Schadstoffs dieser durch Wirkung der Schwerkraft aus den Erdporen tritt und eine im Wasser unlösliche flüssige Phase bildet, die ohne zusätzliche Wasserzugabe hydraulisch-pneumatisch aus dem Boden gepumpt wird. Die Polymerkondensate sind dabei ökotoxikologisch völlig neutral und sind in die WKG 0 (alte Regelung) bzw. 1 (neue Regelung) eingestuft.

In gleicher Weise sind die wässrigen Tensidphasen, die die Polymerkondensate enthalten, in der Lage, Mineralöltröpfchen aus Sedimenten und Gesteinen zu waschen. Sie können daher auch bei der tertiären Erölförderung (EOE = enhanced Oil Recovery) eingesetzt werden.

Ein weiterer Gegenstand der Erfindung betrifft daher des Weiteren ein zweites Verfahren zur tertiären Erdölförderung, bei dem man

(a) die Erdöllagerstätten mit einer wässrigen Phase behandelt, welche einen Gehalt an Polymerkondensaten aufweist, die dadurch erhältlich sind, das man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, in der sich die Schadstoffe lösen, und

(b) die dabei in der Lagerstätte gebildete wässrige Dispersion, Emulsion oder insbesondere Mikroemulsion aus wässriger Phase und Erdöl abpumpt oder durch Druck fördert, und

(c) durch Zugabe geeigneter Hilfsstoffe bricht.

## SCHADSTOFFE

Das erfindungsgemäße Verfahren eignet sich für die Entfernung einer Vielzahl unterschiedlicher Kohlenwasserstoffe, speziell von Schadstoffe aus Böden und Biomieten. Beispiele sind halogenierte, aliphatische oder aromatische Kohlenwasserstoffe (MKW, LHKW), polyzyklische aromatische Kohlenwasserstoffe, BTEX und BTX Aromaten, Phenole, Anilinverbindungen sowie Paraffine. Die Konzentration der Schadstoffe in den zu reinigen Substraten kann von wenigen Milligramm bis in den Bereich von mehreren Gramm/m$^3$ reichen.

## BODENSANIERUNG

In einer ersten Ausführungsform des erfindungsgemäßen Verfahrens können die kontaminierten Böden oder Biomieten mit der Phase unterirdisch gespült oder übersättigt werden. Alternativ kann man die Substrate mit der Phase auch in einer Bodenwaschanlage behandeln. Schließlich ist es möglich, die kontaminierten Böden oder Biomieten mit der Tensidphase zu berieseln, diese über ein Drainagesystem aufzufangen, zu sammeln und gegebenenfalls aufzureinigen und wiederzuverwenden.

Vorzugsweise wird die wässrige Phase bei geringen Tiefen des Schadstoffes im Boden über Gräben versickert. Befindet sich der Schadstoff in Bodentiefen von 2 bis 5 Metern, oder darüber kann die Einspülung der Tensidphase in die kontaminierte Bodenzone mittels Spüllanzen oder über Schluckbrunnen erfolgen.

Vorzugsweise erfolgt die Ermittlung der Konzentration der Polymerkondensate in der wässrigen Phase vor dem eigentlichen Sanierungsvorgang durch die vorangestellte Erkundung der geologischen, geografischen und hydrogeologischen Gegebenheit des kontaminierten Bodens, die Lage, Art und Menge des Schadstoffes und die Höhe des Salzgehaltes und des pH-Wertes des Bodens. Die Konzentration der Polymerkondensate, die vorzugsweise unterhalb der kritischen Micellbildungskonzentration liegt, wird während des Sanierungsverfahrens am Wert der Grenzflächenspannung, die an der Menge der geförderten wässrigen Kohlenwasserstoffphase bestimmbar ist, kontrolliert und beeinflusst.

Nachfolgend wird in den kontaminierten Boden die wässrige Phase in einer solchen Menge in den Boden gebracht, dass alle Porenzwischenräume des kontaminierten Erdreichs im Aquifer benetzt sind. Im nachfolgenden Verfahrensschritt erfolgt das Abpumpen der durch die Mobilitätserhöhung aus den Erdporen herausgetretenen flüssigen Kohlenwasserstoffphase. Eine Mikroemulsionsbildung des Schadstoffes ist nicht gegeben. Da die flüssige Kohlenwasserstoffphase im Wasser unlöslich ist, kann das Grundwasser verfahrenstechnisch im Boden verbleiben. Die Einwirkzeit liegt im Bereich von 12 bis 96 und vorzugsweise 24 bis 48 h.

Ein weiterer Gegenstand der Erfindung betrifft die Verwendung der erfindungsgemäß einzusetzenden Polymerkondensate zur Entfernen von Kohlenwasserstoffen, speziell von Schadstoffen aus Böden oder Biomieten, wobei diese vorzugsweise in Mengen von etwa 1 bis etwa 100 g/m$^3$, vorzugsweise etwa 10 bis etwa 50 g/m$^3$ zu sanierenden Bodens eingesetzt werden.

## TERTIÄRE ERÖLFÖRDERUNG

Eine besondere Ausführungsform eines Bodens der aromatischen Kohlenwasserstoffe enthält, liegt bei einem Erdölvorkommen vor, wenngleich es hier natürlich genau umgekehrt darum geht, den wertvollen "Schadstoff" zu fördern und nicht den gereinigten Boden zurückzuerhalten. Aber auch für diesen Spezialfall eignen sich die Polymerkondensate in besonderer Weise. Das erste und das zweite erfindungsgemäße Verfahren sind daher durch den gleichen erfinderischen Gedanken verbunden.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 μm aufweisen. Neben Erdöl, inklusive Anteilen von Erdgas enthält eine Lagerstätte mehr oder weniger stark salzhaltiges Wasser. Der Salzgehalt von Lagerstättenwasser beträgt nicht selten 5 bis 20 Gew. %; es gibt aber auch Lagerstätten mit einem Salzgehalt von bis zu 27 Gew. %. Bei den gelösten Salzen kann es sich beispielsweise um Alkalimetallsalze handeln, in manchen Lagerstätten enthält das Lagerstättenwasser aber auch über relative hohe Anteile an Erdalkalimetallionen, beispielsweise bis zu 5 Gew. % Calciumionen und/oder Magnesiumionen.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Der Eigendruck kann durch in der Lagerstätte vorhandene Gase wie Methan, E- than oder Propan hervorgerufen werden. Mittels der primären Förderung lassen sich je nach Lagerstättentyp aber meist nur ca. 5 bis 10% der in der Lagerstätte vorhandenen Erdölmenge fördern, danach reicht der Eigendruck nicht mehr zur Förderung.

Nach der primären Förderung kommt daher die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird (siehe Abbildung 1 ). Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her. Diese Situation ist in Abbildung 2 dargestellt: Aufgrund der unterschiedlichen Polarität von Öl und Wasser ergibt sich zwischen beiden Komponenten eine hohe Grenzflächenenergie bzw. Grenzflächenspannung. Daher nehmen beide zueinander die kleinste Kontaktfläche ein, was in einem kugelförmigen Öltropfen resultiert, welcher nicht mehr durch die feinen Kapillaren passt. Am Ende des Wasserflutens ist das Öl also in diskontinuierlicher Form (vereinzelte Kugeltropfen) in den Kapillaren gefangen.

Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung findet sich beispielsweise im Journal of Petroleum Science and Engineering 19 (1998) 265-280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können auch Gase wie CO2 oder Stickstoff Einsatz finden.

Zur tertiären Erdölförderung gehören weiterhin Verfahren, bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinsformation festgehaltenes Erdöl fördern.

Auf das Erdöl, welches gegen Ende der sekundären Förderung in den Poren des Lagerstättengesteins gefangen ist, wirken viskose und kapillare Kräfte, wobei das Verhältnis dieser beiden Kräfte zueinander die mikroskopische Ölentfernung bestimmt. Mittels eines dimensionslose Parameters, der sogenannten Kapillarzahl, wird das Einwirken dieser Kräfte beschrieben. Sie ist das Verhältnis der Viskositätskräfte (Geschwindigkeit x Viskosität der drückenden Phase) zu den Kapillarkräften (Grenzflächenspannung zwischen Öl und Wasser x Benetzung des Gesteins):

$$N = \frac{\mu V}{\sigma \cos\theta}$$

Dabei bedeutet $\mu$ die Viskosität des Erdöl mobilisierenden Fluids, $v$ die Darcy-Geschwindigkeit (Durchfluss pro Flächeneinheit), $\sigma$ die Grenzflächenspannung zwischen Erdöl mobilisierender Flüssigkeit und Erdöl und $\theta$ der Kontaktwinkel zwischen Erdöl und dem Gestein **(C. Melrose, CF. Brandner, J. Canadian Petr. Techn. 58, Oct. Dez., 1974)**. Je höher die Kapillarzahl, desto größer die Mobilisierung des Öls und so- mit auch der Entölungsgrad. Es ist bekannt, dass die Kapillaritätszahl gegen Ende der sekundären Erdölförderung im Bereich von etwa $10^{-6}$ liegt und dass es notwendig ist, die Kapillaritätszahl auf etwa $10^{-3}$ bis $10^{-2}$ zu erhöhen, um zusätzliches Erdöl mobilisieren zu können.

Hierzu kann man beispielsweise die Grenzflächenspannung $\sigma$ zwischen dem Erdöl und der wässrigen Phase durch den Zusatz von geeigneten Tensiden absenken. Diese Technik ist auch als "Tensidfluten" bekannt. Hierzu eignen sich insbesondere Tenside, welche $\sigma$ auf Werte von kleiner $10^{-2}$ mN/m (ultralow interfacial tension) herabsetzen können. Auf diese Art und Weise lassen sich die Öltröpfchen in ihrer Form verändern und durch das Flutwasser durch die Kapillaröffnungen hindurchzwängen.

Analog zur eingangs bereits erläuterten Aufgabenstellung, besteht auch im Zusammenhang mit der Entölung von Lagerstätten die Anforderung, dass die Öltröpfchen sich anschließend zu einer kontinuierlichen Ölbank zu vereinen. Dies hat zweierlei Vorteile: Zum einen können beim Voranschreiten der kontinuierlichen Ölbank durch neues poröses Gestein, die sich dort befindlichen Öltropfen mit der Bank verschmelzen. Weiterhin wird durch die Vereinigung der Öltropfen zu einer Ölbank die Öl-Wasser-Grenzfläche deutlich verringert und somit nicht mehr benötigtes Polymerkondensat freigesetzt. Das freigesetzte Tensid kann danach in der Formation verbliebene Öltropfen mobilisieren.

Beim Tensidfluten unter Einsatz der Polymerkondensate bilden die Tenside mit der Wasser- und der Ölphase üblicherweise eine Mikroemulsion (Winsor Typ III). Hiebei handelt es sich nicht um eine Emulsion mit besonders kleinen Tröpfchen, sondern um eine thermodynamisch stabile, flüssige Mischung von Wasser, Öl und Polymerkondensaten, welche eine sehr niedrige Grenzflächenspannung aufweist und über eine niedrige Viskosität verfügt. Sie steht mit überschüssigem Wasser und überschüssigem Öl im Gleichgewicht. Eine niedrige Viskosität ist wünschenswert zum Transport der Emulsion in der Erdölformation. Bei einer zu hohen Viskosität der zu transportierenden Phase müsste ein hoher Druck aufgewandt werden. Dies wäre einerseits teuer, vor allem bestünde aber auch die Gefahr, dass durch den Druck unerwünschterweise neue Hohlräume in die Erdölformation gesprengt werden. Des Weiteren wird eine Vereinigung der mobilisierten Öltröpfchen zu einer kontinuierlichen Ölbank im Falle zu hoher Viskositäten behindert.

Die Polymerkondensate hingegen erniedrigen die Grenzflächenspannung zwischen Wasser und Öl (üblicherweise ca. 20 mN/m) auf besonders niedrige Werte von weniger als $10^{-2}$ mN/m und ermöglichen auf diese Weise eine ausreichende Mobilisierung des Erdöls. Da die Polymerkondensate temperaturbeständig und auch in Gegenwart von Elektrolyten löslich sind, kann das Tensidfluten auch bei den üblichen Lagerstättentemperaturen von ca. 30 °C bis ca. 130 °C sowie in Gegenwart von stark salzhaltigem Wasser, insbesondere auch in Gegenwart von hohen Anteilen von Calcium- und/oder Magnesiumionen erfolgen. Das Temperaturfenster, innerhalb dessen sich eine Mikroemulsion bildet, ist dabei groß. Die Polymerkondensate verfügen zudem über eine geringe Neigung zur Ausbildung von viskosen oder großen Tensidüberstrukturen und weisen ein geringes Adsorptionsverhalten, so dass nur geringe Verluste in der Formation entstehen.

Die Wanderungsgeschwindigkeit der Tensidflut in der erdölführenden Formation beträgt oft weniger als 1 m/Tag. Je nach dem Abstand zwischen Injektions- und Förderbohrung können daher die Verweilzeiten des Tensids in der Erdöllagerstätte mehrere Monate betragen. Ein weiterer Vorteil der Polymerkondensate besteht daher in ihrer hohen chemischen Langzeitstabilität.

Die resultierende Dispersion, Emulsion oder vorzugsweise Mikroemulsion wird nach der Förderung durch Zugabe üblicher Additive, speziell durch Zugabe von Demulgatoren, gebrochen und das Erdöl von der Tensidphase gravimetrisch getrennt.

Ein weiterer Gegenstand der Erfindung betrifft die Verwendung der erfindungsgemäß einzusetzenden Polymerkondensate zur tertiären Erdölförderung, wobei diese vorzugsweise in Konzentrationen von etwa 0,1 bis etwa 10 Gew.-% und vorzugsweise etwa 1 bis etwa 5 Gew.-% - bezogen auf die wässrige Tensidphase mit der die Lagerstätte gespült wird - eingesetzt werden.

## POLYMERKONDENSATE

Die Polymerkondensate der vorliegenden Erfindung sind teilweise aus dem Stand der Technik bekannt. Umfangreich und mit vielen Beispielen versehen werden sie in der Europäischen Patentschrift EP 0671973 B1 (OLSCHEWSKI), die bezüglich der Herstellung der Stoffe vollumfänglich über direkte Bezugnahme in die Offenbarung eingeschlossen wird.

Als Proteinquellen kommen erfindungsgemäß beispielsweise Sojaproteine, Tiermehle oder vorzugsweise Mikroorganismen in Betracht.

Die Polymerkondensate der vorliegenden Erfindung werden vorzugsweise auf der Basis von in großen Mengen zur Verfügung stehenden Mikroorganismen wie Faulschlamm, Belebtschlamm oder Hefe, insbesondere Bäckerhefe oder Bierhefe gewonnen. Anders als im Stand der Technik sonst beschrieben, dienen diese Mikroorganismen nicht als Biokatalysatoren, die an der eigentlichen chemischen Reaktion nicht teilnehmen, sondern stellen selbst das Ausgangsmaterial dar. Denn Tatsache ist, dass beispielsweise die im Sinne der Erfindung bevorzugten Hefen nichts anderes als komplexe Mischungen von im wesentlichen Proteinen und Polysacchariden darstellen, die über zahlreiche funktionelle Gruppen für nachfolgende Reaktionsschritte verfügen.

Das Molekulargewicht dieser Ausgangsstoffe liegt im Bereich oberhalb von 2 mDa, was dazu führt, dass weder eine Löslichkeit in Wasser oder Öl besteht. Im ersten Reaktionsschritt erfolgt daher ein alkalischer Aufschluss, d.h. die Mikroorganismen werden mit wässriger hochkonzentrierter Alkalilauge, beispielsweise einer 30 Gew.-%igen Natronlauge versetzt, so dass sich ein pH-Wert im Bereich von mindestens 10, vorzugsweise von 12 bis 14 einstellt, und unterhalb der Siedetemperatur, vorzugsweise bei 70 bis 80 °C etwa 2 bis 5 Stunden gerührt. Bei diesem Aufschluss werden die hochmolekularen Ketten aufgebrochen und Bruchstücke erhalten, die gegenüber den Ausgangsstoffen nur noch etwa ein Zehntel des Molekulargewichtes aufweisen. Vorzugsweise besitzen die Bruchstücke ein Molekulargewicht im Bereich von etwa 20 bis etwa 250 kDa, insbesondere etwa 50 bis etwa 220 kDa und besonders bevorzugt etwa 150 bis etwa 200 kDa. Dabei versteht es sich, dass einzelne Bruchstücke auch deutlich höhere oder niedrigere Molekulargewichte aufweisen können. Daher verstehen sich die obigen Angaben insbesondere als Mittelwerte bezogen auf etwa 90 Gew.-% der Gesamtfraktion.

Es ist auch möglich, einen Teil der Mikroorganismen durch andere natürliche Proteinquellen, wie etwa Tiermehl oder Sojaproteine zu ersetzen.

Im zweiten Verfahrensschritt, der getrennt oder als "Eintopfverfahren" durchgeführt werden kann, wird den aufgeschlossenen Mikroorganismen Stoffe zugesetzt, die mit den funktionellen Gruppen in den Molekülen abreagieren können. Dabei handelt es sich um Triglyceride, mehrwertige Carbonsäuren und/oder Polyole mit 2 bis 12 Kohlenstoffatomen und 2 bis 6 Hydroxylgruppen. Die Reaktionen finden basenkatalysiert statt; d.h. in der Regel bedarf es keines weiteren Zusatzes an Alkalihydroxid, da die Lösung noch basisch genug eingestellt ist.

Bei Zusatz der Triglyceride kommt es unter alkalischen Bedingungen zu einer Verseifung. Fettsäuren werden freigesetzt, die mit Hydroxyl- oder Aminogruppen in den Protein-oder Polyzuckern Ester- oder Amidbindungen eingehen können. Zurück bleiben vor allem Partialglyceride, die selbst oberflächenaktiv sind und ausgezeichnete Emulgatoreigenschaften aufweisen. Fettsäuren, die nicht abreagieren, liegen nach der Reaktion als Seifen vor und sind damit ebenfalls oberflächenaktiv.

Geeignete Triglyceride weisen in der Regel 6 bis 22 und vorzugsweise 12 bis 18 Kohlenstoffatome auf und können gesättigt sein oder 1, 2 oder 3 Doppelbindungen aufweisen. Typische Beispiele sind pflanzliche Öle wie Palmöl, Palmkernöl, Kokosöl, Sonnenblumenöl, Sojaöl, Olivenöl, Rapsöl, Distelöl, Leinöl oder (see)tierische Ausgangsstoffe wie Fischöl oder Rindertalg. Die Ausgangsstoffe können Jodzahlen im Bereich von 1 bis 120 aufweisen. Vorzugsweise werden Mischungen von gesättigten und ungesättigten Triglyceriden eingesetzt, wie beispielsweise (gehärtetes) Palmöl und Sonnenblumenöl oder (gehärteter) Rindertalg und Rapsöl oder teilgehärtetes Kokosöl.

Die Erfindung schließt die Erkenntnis ein, dass die komplexe Aufgabe noch besser gelöst wird, wenn Polymerkondensate auf Basis unterschiedlicher Triglyceride getrennt hergestellt und dann gemischt werden. In diesem Sinne bevorzugt und daher ebenfalls Gegenstand der vorliegenden Erfindung ist eine Mischung umfassend oder bestehend aus

(a) einem ersten Polymerkondensat, dass dadurch erhältlich ist, dass man eine Proteinquelle, vorzugsweise Mikroorganismen mit wässrigen Alkalibasen behandelt und die so erhaltenen Zwischenprodukte anschließend mit mindestens einem ungesättigten Pflanzenöl (Iodzahlen oberhalb von 100, vorzugsweise zwischen 105 und 125) mit überwiegend, d.h. zu mehr als 50 Mol-% 16 bis 22 Kohlenstoffatomen und 1 bis 3, vorzugsweise 2 bis 3 Doppelbindungen sowie gegebenenfalls mehrwertigen Carbonsäuren und/oder Polyolen mit 2 bis 12 Kohlenstoffatomen und 2 bis 6 Hydroxylgruppen umsetzt, und

(b) einem zweiten Polymerkondensat, dass dadurch erhältlich ist, dass man eine Proteinquelle, vorzugsweise Mikroorganismen mit wässrigen Alkalibasen behandelt und die so erhaltenen Zwischenprodukte anschließend mit mindestens einem gesättigten pflanzlichen oder tierischen Fett (Iodzahlen unter 20, vorzugsweise zwischen 5 und 15) mit überwiegend, d.h. zu mehr als 50 Mol-% 16 bis 22 Kohlenstoffatomen sowie

gegebenenfalls mehrwertigen Carbonsäuren und/oder Polyolen mit 2 bis 12 Kohlenstoffatomen und 2 bis 6 Hydroxylgruppen umsetzt, wobei das Gewichtsverhältnis zwischen den Komponenten (a) und (b) im Bereich von etwa 90:10 bis etwa 10:90, vorzugsweise etwa 75:25 bis 25:75 und insbesondere etwa 60:40 bis etwa 40:60 liegen kann.

Ebenfalls Gegenstand der vorliegenden Erfindung sind mutatis-mutandis Verfahren, die diese Mischungen als Polymerkondensate nutzen sowie die Verwendung der Mischungen in den genannten verfahren.

Durch den Zusatz von mehrwertigen Carbonsäuren kann es über die Säurefunktionen zur Bildung von verbrückten Spezies kommen. Als mehrwertige Carbonsäuren kommen Oxalsäure, Adipinsäure, Malonsäure, Maleinsäure und insbesondere Hydroxysäuren wie Zitronen- und Weinsäure in Betracht.

Die Polyole sind in der Lage mit Säuregruppen in den polymeren Bruchstücken abzureagieren oder überschüssige freigesetzte Fettsäuren abzufangen. Sie können noch weitere funktionelle Gruppen, insbesondere Aminogruppen, enthalten bzw. selbst mit Stickstoff modifiziert sein. Typische Beispiele sind

- Glycerin;

- Alkylenglykole, wie beispielsweise Ethylenglykol, Diethylenglykol, Propylenglykol, Butylenglykol, Hexylenglykol sowie Polyethylenglykole mit einem durchschnittlichen Molekulargewicht von 100 bis 1.000 Dalton;

- technische Oligoglyceringemische mit einem Eigenkondensationsgrad von 1,5 bis 10 wie etwa technische Diglyceringemische mit einem Diglyceringehalt von 40 bis 50 Gew.-%;

- Methyolverbindungen, wie insbesondere Trimethylolethan, Trimethylolpropan, Trimethylolbutan, Pentaerythrit und Dipentaerythrit;

- Niedrigalkylglucoside, insbesondere solche mit 1 bis 8 Kohlenstoffen im Alkylrest, wie beispielsweise Methyl- und Butylglucosid;

- Zuckeralkohole mit 5 bis 12 Kohlenstoffatomen, wie beispielsweise Sorbit oder Mannit,

- Zucker mit 5 bis 12 Kohlenstoffatomen, wie beispielsweise Glucose oder Saccharose;

- Aminozucker, wie beispielsweise Glucamin;

- Dialkoholamine, wie Diethanolamin oder 2-Amino-1,3-propandiol.

Das molare Verhältnis der reaktionsfähigen Gruppen in der der Summe von Biomasse und Triglycerid einerseits und mehrwertigen Carbonsäuren und Polyolen andererseits beträgt vorzugsweise 10:1 bis 1:2 und insbesondere etwa 3:1 bis etwa 1:1. Über die Auswahl der Derivatisierungsstoffe und deren Menge lässt sich der HLB-Wert der Reaktionsprodukte in weitem Maße einstellen, so dass je nach Bedarf eher lipophile Zubereitungen (HLB-Werte 6 bis 10) oder hydrophile Mischungen (HLB-Werte 11 bis 18) erhalten werden. Bezüglich der Auswahlregeln sei wieder auf die Offenbarung in der eingangs genannten Patentschrift EP 0671973 B1 verwiesen.

Die bevorzugten Polymerkondensate werden auf Basis von Proteinquellen und vorzugsweise auf Basis von Mikroorganismen erhalten, die nach dem alkalischen Aufschluss mit Triglyceriden und Zitronensäure weiter umgesetzt werden. Besonders bevorzugt sind diejenigen, bei denen die Mikroorganismen wiederum Hefen, speziell Bäckerhefe darstellen.

Vorzugsweise werden die Polymerkondensate in Konzentrationen unterhalb ihrer kritischen Micellbildungskonzentration eingesetzt, da Micellbildung häufig den Extraktionsprozess behindert. Ein besonderes Charakteristikum der erfindungsgemäß einzusetzenden Polymerkondensate ist der Umstand, dass sie über zwei Micellbildungskonzentrationen verfügen.

**TENSIDISCHE ZUSATZSTOFFE**

In einer alternativen Ausführungsform kann die wässrige Phase sowohl bei der Bodensanierung als auch bei der tertiären Erdölförderung auch noch weitere Tenside, insbesondere schaumarme nichtionische Tenside enthalten. Typische Beispiele umfassen:

- Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;

- Alkyl- und/oder Alkenyloligoglykoside mit 8 bis 22 Kohlenstoffatomen im Alk(en)ylrest und deren ethoxylierte Analoga;

- Anlagerungsprodukte von 1 bis 15 Mol Ethylenoxid an Ricinusöl und/oder gehärtetes Ricinusöl;

- Anlagerungsprodukte von 15 bis 60 Mol Ethylenoxid an Ricinusöl und/oder gehärtetes Ricinusöl;

- Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;

- Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;

- Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.

- Mono-, Di- und Trialkylphosphate sowie Mono-, Di- und/oder Tri-PEG-alkylphosphate und deren Salze;

- Wollwachsalkohole;

- Polysiloxan-Polyalkyl-Polyether-Copolymere bzw. entsprechende Derivate;

- Block-Copolymere z.B. Polyethylenglycol-30 Dipolyhydroxystearate;

- Polymeremulgatoren, z.B. Pemulen-Typen (TR-1,TR-2) von Goodrich oder Cosmedia® SP von Cognis;

- Polyalkylenglycole sowie

- Glycerincarbonat.

Im Folgenden werden besonders geeignete Emulgatoren und Entschäumer näher erläutert:

**Alkoxylate**. Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. Besonders bevorzugt sind Alkoxylate, die im Mittel 1 bis 10 Mol Propylenoxid oder 1 bis 5 Mol Propylenoxid und 1 bis 10 Mol Ethylenoxid aufweisen, da diese über besonders vorteilhafte Entschäumereigenshaften verfügen. Typische Beispiele sind Laurylalkohol+2PO, Kokosfettalkohol+8EO+2PO oder Talgfettalkohol+1PO+5EO.

**Alkyl- und/oder Alkenyloligoglykosid**. Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

**Partialglyceride**. Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremonoglycerid, Ricinolsäurediglycerid, Linolsäuremonoglycerid, Linolsäurediglycerid, Linolensäure-monoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

**Sorbitanester**. Als Sorbitanester kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesquitartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitandimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

**Polyglycerinester**. Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.

**Mischether**. Typische Beispiele für geeignete Mischether sind Umsetzungsprodukte von $C_8$-$C_{18}$, vorzugsweise $C_{12}$-$C_{14}$-Fettalkoholen mit 1 bis 10 Mol Ethylenoxid und/oder 1 bis 5 Mol Propylenoxid, die mit Butylchlorid oder Benzylchlorid endgruppenverschlossen sind.

Ebenfalls möglich ist es, den Produkten als Emulgatoren Proteinquellen, wie beispielsweise Gelatine zuzusetzen. Der Zusatz von Emulgatoren hat direkte Auswirkung auf die dynamische Oberflächenspannung der Produkte.

Das Gewichtsverhältnis zwischen den Polymerkondensaten und den Co-Tensiden kann im Bereich zwischen etwa 99:1 bis etwa 50:50, vorzugsweise etwa 95:5 bis etwa 70:30 und insbesondere etwa 90:10 bis etwa 80:20.

**BEISPIELE**

**HERSTELLBEISPIELE**

**HERSTELLBEISPIEL H1: POLYMERKONDENSAT A**

400 g Brauhefe (30 Gew.-%ig) wurden mit 150 g 40 Gew.-%iger wässriger Natronlauge und 40 g PEG 300 versetzt und 30 Minuten lang bei einer Temperatur von 80 °C gerührt. Dann wurden 50 g Kokosfett (Jodzahl <1) und 75 g Kokosöl (Jodzahl 10) hinzugegeben und der Ansatz für weitere 3 Stunden bei einer Temperatur von 75 °C gerührt. Nach dem Abkühlen wurden die Reaktionsprodukte in Form einer bräunlichen wässrigen Lösung erhalten, die einen Feststoffgehalt von etwa 43 Gew.-% und einen pH-Wert von 9,5 einer 1 Gew.-% Lösung aufwies.

**HERSTELLBEISPIEL H2: POLYMERKONDENSAT B**

400 g Brauhefe (30 Gew.-%ig) wurden mit 150 g 40 Gew.-%iger wässriger Natronlauge und 30 g PEG 400 versetzt und 30 Minuten lang bei einer Temperatur von 80 °C gerührt. Dann wurden 70 g gehärteter Rindertalg (Jodzahl < 1; Säurezahl 4) und 80 g Palmöl (Jodzahl 50) hinzugegeben und der Ansatz für weitere 4 Stunden bei einer Temperatur von 80 °C gerührt. Nach dem Abkühlen wurden die Reaktionsprodukte in Form einer bräunlichen wässrigen Lösung erhalten, die einen Feststoffgehalt von etwa 51 Gew.-% und einen pH-Wert von 13,0 aufwies.

**HERSTELLBEISPIEL H3: POLYMERKONDENSAT C**

400 g Bäckerhefe (35 Gew.-%ig) wurden mit 144 g 40 Gew.-%iger wässriger Natronlauge sowie mit 20 g Zitronensäure und 16 Gramm Glycerin versetzt und 30 Minuten lang bei einer Temperatur von 80 °C unter Zugabe von 28 Gramm gehärtetem Kokosfett gerührt. Dann wurde eine Mischung aus 120 g Sonnenblumenöl und Rapsöl hinzugegeben und der Ansatz für weitere 3 Stunden bei einer Temperatur von 80 °C gerührt. In einem zweiten Schritt wurde zwischenzeitlich noch einmal die gleiche Menge und die gleiche Ölmischung dazugegeben. 24 Gramm Natronlauge ergänzen die Rezeptur.

Nach dem Abkühlen wurden die Reaktionsprodukte in Form einer bräunlichen wässrigen Lösung erhalten, die einen Feststoffgehalt von etwa 60 Gew.-% und einen pH-Wert von 12,2 in der 10 Gew-%igen Lösung aufwies.

**HERSTELLBEISPIEL H4: POLYMERKONDENSAT D**

1000 g Belebtschlamm (25 Gew.-%ig) wurden mit 300 g 40 Gew.-%iger wässriger Natronlauge sowie 15 g Zitronensäure, 15 g Maleinsäure, 40 g PEG 600 sowie 20 g PEG 200 versetzt und 1 Stunde lang bei einer Temperatur von 80 °C gerührt. Dann wird eine Mischung aus 150 g Sonnenblumenöl (Jodzahl 130) und 100 g erucareiches Rapsöl (Jodzahl 100) hinzugegeben und der Ansatz für weitere 3 Stunden bei einer Temperatur von 70 °C gerührt. Nach dem Abkühlen wurden die Reaktionsprodukte in Form einer bräunlich-grauen wässrigen Lösung erhalten, die einen Feststoffgehalt von etwa 43 Gew.-% und einen pH-Wert von 9,5 aufwies.

**HERSTELLBEISPIEL H5: POLYMERKONDENSAT E**

400 g Bäckerhefe (35 Gew.-%ig) wurden mit 144 g 40 Gew.-%iger wässriger Natronlauge sowie mit 20 g Zitronensäure und 16 Gramm Glycerin versetzt und 30 Minuten lang bei einer Temperatur von 80 °C unter Zugabe von 28 Gramm gehärtetem Kokosfett gerührt. Dann wurde eine Mischung aus 120 g Sonnenblumenöl und Hanföl hinzugegeben und der Ansatz für weitere 3 Stunden bei einer Temperatur von 80 °C gerührt. In einem zweiten Schritt wurde zwischenzeitlich noch einmal die gleiche Menge und die gleiche Ölmischung dazugegeben. 24 Gramm Natronlauge ergänzen die Rezeptur. Nach dem Abkühlen wurden die Reaktionsprodukte in Form einer bräunlichen wässrigen Lösung erhalten, die einen Feststoffgehalt von etwa 60 Gew.-% und einen pH-Wert von 9,5 aufwies.

**HERSTELLBEISPIEL H6: POLYMERKONDENSAT F**

135 g Sojaschrot wurden mit 144 g 40 Gew.-%iger wässriger Natronlauge sowie mit 20 g Zitronensäure in 200 Gramm Wasser gelöst und 16 Gramm Glycerin versetzt werden 30 Minuten lang bei einer Temperatur von 80 °C unter Zugabe von 28 Gramm gehärtetem Kokosfett gerührt. Dann wurde eine Mischung aus 120 g Sonnenblumenöl und Rapsöl hinzugegeben und der Ansatz für weitere 3 Stunden bei einer Temperatur von 80 °C gerührt. In einem zweiten Schritt wurde zwischenzeitlich noch einmal die gleiche Menge und die gleiche Ölmischung dazugegeben. 24 Gramm Natronlauge ergänzen die Rezeptur. Nach dem Abkühlen wurden die Reaktionsprodukte in Form einer bräunlichen wässrigen Lösung erhalten, die einen Feststoffgehalt von etwa 60 Gew.-% und einen pH-Wert von 12,9 Proozent in einer 10 Gew.-%igen Lösung aufwies.

ANWENDUNGSTECHNISCHE BEISPIELE

**BEISPIEL 1**

In ein feinkörniges Sediment, das mit Trichlorethylen belastet war, wurde eine wässrige Lösung einer Mischung der Polymerkondensate B und C (Gewichtsverhältnis 1:1) in einer solchen Konzentration eingebracht, dass die Tensidkonzentration im kontaminierten Bodenvolumen unterhalb der kritischen Micellbildungskonzentration lag und sich die erforderliche Erniedrigung der Grenzflächenspannung zwischen den Schadstofftröpfchen und dem Grundwasser einstellte. Dieses wurde während des Verfahrens über die Verfolgung der Oberflächenspannung des Grundwassers aus geeigneten Monitoringpegeln kontrolliert und beeinflusst. Nach einer Verweilzeit von 48 Stunden wurde die sich gebildete flüssige Trichlorethylenphase aus dem Aquifer hydraulisch gefördert. Die Tensidgabe wurde wiederholt, bis die Kohlenwasserstoffkonzentrationen im Förderstrom innerhalb der gesetzlichen Grenzwerte lag. Anschließend wurde der Boden solange mit Wasser gewaschen, bis im Förderstrom kein Tensid mehr nachweisbar war.

**BEISPIEL 2**

Aus einem Sandboden, der mit polyzyklischen aromatischen Kohlenwasserstoffen belastet war, wurden mittels hydraulischer Verfahren das Wasser und die vorliegende Kohlenwasserstoffphase abgezogen. Anschließend wurde eine wässrige Phase mit dem Polymerkondensat C in einer solchen Menge eingebracht, dass sich die Tensidkonzentration im Boden unterhalb der kritischen Micellbildungskonzentration befand. Dieses wurde während des Verfahrens über die Verfolgung der Oberflächenspannung des Grundwassers aus geeigneten Monitoringpegeln kontrolliert und beeinflusst. Nach einer Verweilzeit von 12 Stunden wurde die wässrige Phase und die neugebildete Kohlenwasserstoffphase hydraulisch gefördert. Die Zugabe der Polymerkondensate wurde wiederholt, bis die Kohlenwasserstoffkonzentration im Förderstrom innerhalb der gesetzlichen Grenzwerte lag. Anschließend wurde der Boden solange mit Wasser gewaschen, bis im Förderstrom kein Tensid mehr nachweisbar war

**BEISPIEL 3**

In ein feinkörniges Sediment, das mit Trichlorethylen belastet war wurde eine wässrige Phase mit einer Mischung der Polymerkondensate B und C (Gewichtsverhältnis 1:1) in einer solchen Konzentration eingebracht, dass die Tensidkonzentration im kontaminierten Bodenvolumen unterhalb der kritischen Micellbildungskonzentration lag. Dieses wird wurde während des Verfahrens über die Verfolgung der Oberflächenspannung des Grundwassers aus geeigneten Monitoringpegeln kontrolliert und beeinflusst. Nach einer Verweilzeit von 48 Stunden wurden das Grundwasser und die Trichlorethylenphase hydraulisch gefördert. Anschließend wurde das noch im Boden befindliche Trichlorethylen mittels einer Bodenluft-Absaugung pneumatisch gefördert. Der zeitliche Einsatz der Bodenluft-Absaugung ließ sich nach der vorgenommenen Behandlung mit den Polymerkondensatenum den Faktor 5,5 verkürzen.

**Patentansprüche**

1. Verfahren zum Entfernen von Kohlenwasserstoffen aus Böden, Gesteinen, Sedimenten oder Biomieten bei dem man

   (a) die Substrate mit einer wässrigen Phase behandelt, welche einen Gehalt an Polymerkondensaten aufweist, die dadurch erhältlich sind, das man eine Proteinquelle mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, in der sich die Schadstoffe lösen, und
   (b) die wässrige Phase, welche die Kohlenwasserstoffe enthält, abpumpt.

2. Verfahren nach Anspruch 1, **dadurch gekennzeichnet, dass** man als Kohlenwasserstoffe organische Schadstoffe entfernt, die ausgewählt sind aus der Gruppe, die gebildet wird von halogenierten, aliphatischen oder aromatischen Kohlenwasserstoffen (MKW, LHKW), polyzyklischen aromatischen Kohlenwasserstoffen, BTEX und BTX Aromaten, Phenolen, Anilinverbindungen und Paraffinen.

3. Verfahren nach den Ansprüchen 1 und/oder 2, **dadurch gekennzeichnet, dass** man die Substrate mit der wässrigen Phase unterirdisch spült oder übersättigt, in einer Bodenwaschanlage behandelt oder berieselt und die wässrige Phase über ein Drainagesystem auffängt, sammelt und gegebenenfalls aufreinigt und wiederverwendet.

4. Verfahren zur tertiären Erdölförderung, bei dem man

   (a) die Erdöllagerstätten mit einer wässrigen Phase behandelt, welche einen Gehalt an Polymerkondensaten aufweist, die dadurch erhältlich sind, das man Mikroorganismen mit wässrigen Alkalibasen behandelt und die so erhaltenen Zwischenprodukte anschließend mit Triglyceriden sowie gegebenenfalls mehrwertigen Carbonsäuren und/oder Polyolen mit 2 bis 12 Kohlenstoffatomen und 2 bis 6 Hydroxylgruppen umsetzt, in der sich die Schadstoffe lösen, und

(b) die dabei in der Lagerstätte gebildete wässrige Dispersion, Emulsion oder insbesondere Mikroemulsion aus wässriger Phase und Erdöl abpumpt oder durch Druck fördert, und

(c) durch Zugabe geeigneter Hilfsstoffe bricht.

5. Verfahren nach mindestens einem der Ansprüche 1 bis 4, **dadurch gekennzeichnet, dass** man Polymerkondensate einsetzt, die ein durchschnittliches Molekulargewicht im Bereich von 20.000 bis 250.000 Dalton aufweisen.

6. Verfahren nach mindestens einem der Ansprüche 1 bis 5, **dadurch gekennzeichnet, dass** man Polymerkondensate einsetzt, die auf Basis von Hefen erhalten werden.

7. Verfahren nach mindestens einem der Ansprüche 1 bis 6, **dadurch gekennzeichnet, dass** man Polymerkondensate einsetzt, die auf Basis von Proteinquellen erhalten werden, die nach dem alkalischen Aufschluss mit Triglyceriden und Zitronensäure weiter umgesetzt werden.

8. Verfahren nach mindestens einem der Ansprüche 1 bis 7, **dadurch gekennzeichnet, dass** man die Polymerkondensate in Konzentrationen unterhalb ihrer kritischen Micellbildungskonzentration einsetzt.

9. Verfahren nach mindestens einem der Ansprüche 1 bis 8, **dadurch gekennzeichnet, dass** man die Polymerkondensate zusammen mit weiteren Tensiden auf Basis nachwachsender Rohstoffe einsetzt.

10. Verwendung von Polymerkondensaten nach Anspruch 1 zum Entfernen von Kohlenwasserstoffen aus Böden, Gesteinen, Sedimenten oder Biomieten.

11. Verwendung nach Anspruch 11, **dadurch gekennzeichnet, dass** man die Polymerkondensate in Mengen von 1 bis etwa 100 g/m$^3$ zu Substrat einsetzt.

12. Verwendung von Polymerkondensaten nach Anspruch 1 zur tertiären Erdölförderung.

13. Verwendung von Polymerkondensaten nach Anspruch 12, **dadurch gekennzeichnet, dass** man die Polymerkondensate in Konzentrationen von etwa 0,1 bis etwa 10 Gew.% - bezogen auf die wässrige Phase mit der die Lagerstätte gespült wird - einsetzt.

14. Mischungen, enthaltend oder bestehend aus

(a) einem ersten Polymerkondensat, dass dadurch erhältlich ist, dass man Mikroorganismen mit wässrigen Alkalibasen behandelt und die so erhaltenen Zwischenprodukte anschließend mit mindestens einem ungesättigten Pflanzenöl (Iodzahlen oberhalb von 100, vorzugsweise zwischen 105 und 125) mit überwiegend, d.h. zu mehr als 50 Mol-% 16 bis 22 Kohlenstoffatomen und 1 bis 3, vorzugsweise 2 bis 3 Doppelbindungen sowie gegebenenfalls mehrwertigen Carbonsäuren und/oder Polyolen mit 2 bis 12 Kohlenstoffatomen und 2 bis 6 Hydroxylgruppen umsetzt, und

(b) einem zweiten Polymerkondensat, dass dadurch erhältlich ist, dass man Mikroorganismen mit wässrigen Alkalibasen behandelt und die so erhaltenen Zwischenprodukte anschließend mit mindestens einem gesättigten pflanzlichen oder tierischen Fett (Iodzahlen unter 20, vorzugsweise zwischen 5 und 15) mit überwiegend, d.h. zu mehr als 50 Mol.-% 16 bis 22 Kohlenstoffatomen sowie gegebenenfalls mehrwertigen Carbonsäuren und/oder Polyolen mit 2 bis 12 Kohlenstoffatomen und 2 bis 6 Hydroxylgruppen umsetzt.

15. Mischungen nach Anspruch 15, **dadurch gekennzeichnet, dass** sie die Komponenten (a) und (b) im Gewichtsverhältnis von etwa 90: 10 bis etwa 10:90 enthalten.

**Europäisches Patentamt**
**European Patent Office**
**Office européen des brevets**

# EUROPÄISCHER RECHERCHENBERICHT

**Nummer der Anmeldung**

EP 14 18 2973

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 379 101 A1 (HOECHST AG [DE]) 25. Juli 1990 (1990-07-25) * Seite 2, Zeile 13 - Seite 3, Zeile 6; Ansprüche 1,4 * * Seite 3, Zeilen 30-38; Tabellen 2-5 * ----- | 1-13 | INV. C09K8/584 B09C1/02 |
| X | US 4 612 991 A (SHAW JAMES E [US]) 23. September 1986 (1986-09-23) * Spalte 2, Zeile 61 - Spalte 3, Zeile 2; Anspruch 1; Beispiel 1 * ----- | 1-4,10, 12,13 | |
| X | DE 43 07 270 C1 (AUF ANALYTIK UMWELTTECH FORSCH [DE]) 11. Mai 1994 (1994-05-11) * Anspruch 1; Beispiel 5; Tabelle 1 * ----- | 14,15 | |
| X,D | DE 43 34 689 A1 (OLSCHEWSKI MAX [DE]; OLSCHEWSKI BRIGITTE DR [DE]) 6. April 1995 (1995-04-06) * Anspruch 1; Beispiel 2 * ----- | 14,15 | |
| A | DE 196 05 007 A1 (FRAENKEL MANFRED E [DE]) 31. Juli 1997 (1997-07-31) * Spalte 1, Zeile 67 - Spalte 3, Zeile 7; Ansprüche 1,5-8; Beispiel 2 * ----- | 1-15 | RECHERCHIERTE SACHGEBIETE (IPC) C09K B09C E21B |
| A,D | DE 199 14 922 A1 (ADOLPHI PETER [DE]; ROTH ULRICH [DE]; MENYES ULF [DE]; SCHMIDT GERHARD) 5. Oktober 2000 (2000-10-05) * Spalte 1, Zeile 54 - Spalte 2, Zeile 5; Anspruch 1; Beispiele 1-3 * ----- | 1-15 | |
| A | DD 273 275 A1 (AKAD WISSENSCHAFTEN DDR [DD]) 8. November 1989 (1989-11-08) * Ansprüche 1,2; Beispiele 1-9 * ----- | 1-15 | |
| A | JP H03 130300 A (TUROWSKI ANGELIKA [DE] ET AL) 4. Juni 1991 (1991-06-04) * Zusammenfassung * ----- | 1-15 | |

Der vorliegende Recherchenbericht wurde für alle Patentansprüche erstellt

| Recherchenort | Abschlußdatum der Recherche | Prüfer |
|---|---|---|
| München | 3. Februar 2015 | Redecker, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 18 2973

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2015

| Im Recherchenbericht angeführtes Patentdokument | Datum der Veröffentlichung | Mitglied(er) der Patentfamilie | | Datum der Veröffentlichung |
|---|---|---|---|---|
| EP 0379101 A1 | 25-07-1990 | CA | 2007817 A1 | 17-07-1990 |
| | | DE | 3901149 A1 | 20-09-1990 |
| | | EP | 0379101 A1 | 25-07-1990 |
| | | NO | 900230 A | 18-07-1990 |
| US 4612991 A | 23-09-1986 | KEINE | | |
| DE 4307270 C1 | 11-05-1994 | DE | 4307270 C1 | 11-05-1994 |
| | | EP | 0613950 A1 | 07-09-1994 |
| DE 4334689 A1 | 06-04-1995 | AT | 144440 T | 15-11-1996 |
| | | DE | 4334689 A1 | 06-04-1995 |
| | | EP | 0671973 A1 | 20-09-1995 |
| | | WO | 9509691 A1 | 13-04-1995 |
| DE 19605007 A1 | 31-07-1997 | KEINE | | |
| DE 19914922 A1 | 05-10-2000 | KEINE | | |
| DD 273275 A1 | 08-11-1989 | KEINE | | |
| JP H03130300 A | 04-06-1991 | CA | 2024782 A1 | 08-03-1991 |
| | | DE | 3929740 A1 | 14-03-1991 |
| | | EP | 0417619 A1 | 20-03-1991 |
| | | JP | H03130300 A | 04-06-1991 |
| | | US | 5071960 A | 10-12-1991 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3908171 A1
- DE 4446654 A1
- DE 4210949 A1
- DE 4333255 A1
- EP 0761323 A1
- DE 4310776 A1
- DE 19914922 B4
- WO 1998047638 A1
- EP 0671973 B1, OLSCHEWSKI

**In der Beschreibung aufgeführte Nicht-Patentliteratur**

- **DURCH NEUMANN, H. J. et al.** Tensidfluten - Ein Jahrzehnt Forschung. *Erdoel, Erdgas, Lagerstaettentechnik,* 1986, vol. 102 (9
- **WLB WASSER ; LUFT ; BODEN.** *Reinigung mineralölkontaminierten Erdreichs mit Tensiden,* 1991, 7-8
- *Journal of Petroleum Science and Engineering,* 1998, vol. 19, 265-280
- **C. MELROSE ; CF. BRANDNER.** *J. Canadian Petr. Techn.,* Oktober 1974, 58